# EUROPEAN PATENT APPLICATION

(11) **EP 1 657 655 A2**
(43) Date of publication of application: **17.05.2006**
(21) Application number: 05024633.9
(22) Date of filing: 11.11.2005
(51) Int. Cl.: G06F 17/30

(54) **Method, system and computer program product for reference categorization and/or reference particulars mining**

(30) Priority: 12.11.2004 US 626958 P
(71) Applicant: Trialstat Corporation, Ottawa ON K1N 7A2 (CA)
(72) Inventor: O'Blenis, Peter Andrew, Manotick Ontario K1N 7A2 (CA)
(74) Representative: Körner, Ekkehard

(57) **Abstract**

A method, system and computer program product for reference categorization and reference particulars mining is disclosed. The method for reference categorization is carried out in a computerized evaluation of references undertaking of the type in which questions including screening questions and sub-screening questions are posed to reviewers of the references. The method includes the step of accepting responses to the screening questions and the sub-screening questions. The responses are provided by the reviewers and recorded in a data store. The method also includes the step of excluding at least one of the references from the undertaking. The excluding of the reference is a result of at least one of the screening question responses. The method additionally includes the step of promoting a subset of the references from a screening level to a higher level. The promoting of the subset is a result of at least another of the screening question responses. The method also includes the step of allocating at least one of the subset to an additional level. The allocating of the one of the subset is a result of at least one of the sub-screening question responses.

## Description

The present invention relates to computerized collection of data systems and, in particular, the carrying out of sub-screening in a computerized collection of data system.

Conducting systematic reviews is process intensive with a good deal of data management overhead; however many systematic reviews that are currently being conducted within various organizations/enterprises involve very little automation. Many of these reviews that are currently being carried out involve distributing paper copies of forms along with printouts of reference abstracts to reviewers who then complete the paper forms and send them back. Once completed forms have been received, a data entry person would need to transcribe the responses into a database, for example an Excel™ spreadsheet or a customized Access™ database. Once the data is in the database, it is processed to make a number of determinations such as which references are excluded, what full references will need to be ordered, whether any conflicts exist between answers provided by different reviewers for different references, etc. Once the data is processed for one level of the review, a new, culled, reference list is generated and this, along with the forms and, where applicable, complete copies of the references for the next level are sent to the reviewers. This sequence repeats itself until the review is complete.

Some automation of reference categorization problems and reference particulars mining problems that exist in the context of systematic reviews are also manifest problems in the context of other types of undertakings that have similarities to aspects of systematic reviews.

According to one embodiment of the invention is a method for reference categorization is carried out in a computerized evaluation of references undertaking of the type in which questions including screening questions and sub-screening questions are posed to reviewers of the references. The method includes the step of accepting responses to the screening questions and the sub-screening questions. The responses are provided by the reviewers and recorded in a data store. The method also includes the step of excluding at least one of the references from the undertaking. The excluding of the reference is a result of at least one of the screening question responses. The method additionally includes the step of promoting a subset of the references from a screening level to a higher level. The promoting of the subset is a result of at least another of the screening question responses. The method also includes the step of allocating at least one of the subset to an additional level. The allocating of the one of the subset is a result of at least one of the sub-screening question responses.

According to another embodiment of the invention is an article of manufacture for a computerized evaluation of references undertaking of the type in which questions including screening questions and sub-screening questions are posed to reviewers of the references. Responses to the screening questions and the sub-screening questions are recorded in a data store. The article of manufacture includes at least one processor readable carrier that includes code for accepting the responses provided by the reviewers. The processor readable carrier also includes code for excluding at least one of the references from the undertaking. The reference is excluded on account of at least one of the screening question responses. The processor readable carrier additionally includes code for promoting a subset of the references from a screening level to a higher level. The subset is promoted on account of at least another of the screening question responses. The processor readable carrier also includes code for allocating at least one the subset to an additional level. The one of the subset is allocated on account of at least one of the sub-screening question responses.

According to yet another embodiment of the invention is a method for conducting an evaluation of references undertaking in which a defined references set is reviewed and evaluated. The method includes the step of establishing a set of levels. The levels include at least one general level and at least one conditional level. The method also includes the step of assigning reviewers to the levels. The method also includes the step of defining a review schema. The review schema includes algorithms for promoting a subset of the references set to the general level and for sub-screening at least one of the subset to the conditional level. The method also includes the step of establishing a set of electronic review forms for receiving data from the reviewers. The method also includes the step of collecting the data entered into the electronic review forms. The data enables the algorithms to be carried out. The method also includes the step of carrying out the algorithms, whereby the subset is promoted to the general level and the one of the subset is sub-screened to the conditional level.

According to yet another embodiment of the invention is a method for determining possible sets of reference equivalents by processing a plurality of reference particulars. The reference particulars include titles of each of a plurality of references. The method includes the step of grouping a number of the titles of the references into sets of same titles based on sufficient title similarity. Those titles that are sufficiently unique are not grouped into any of the sets. The method also includes the step correlating the sets of same titles to corresponding sets of references having those titles, and it is these sets of references that are identified as the possible sets of reference equivalents.

Conveniently the grouping step can include performing a sort by title.

According to yet embodiment of the invention is a method for determining possible sets of reference equivalents by processing a plurality of reference particulars. The reference particulars include titles of each of a plurality of references and names of authors of the references. The method includes the step of generating a number of title-author groupings wherein each title-author pair in each grouping is sufficiently similar to the other title-author pair(s) in the grouping. Those title-author pairs that are sufficiently unique are not grouped into any of the groupings. The method also includes the step correlating the groupings of title-author pairs to corresponding sets of references having those title-author pairs, and it is these sets of references that are identified as the possible sets of reference equivalents.

Conveniently the generating step can include performing a sort by title and performing a sort by author.

According to yet another embodiment of the invention is a method for determining possible sets of reference equivalents by processing a plurality of reference particulars. The reference particulars include titles of each of a plurality of references, names of authors of the references and last page numbers (endpages) of the references. The method includes the step of generating a number of title-author-endpage groupings wherein each title-author-endpage triplet in each grouping is sufficiently similar to the other title-author-endpage triplet(s) in the grouping. Those title-author-endpage triplets that are sufficiently unique are not grouped into any of the groupings. The method also includes the step correlating the groupings of title-author-endpage triplets to corresponding sets of references having those title-author-endpage triplets, and it is these sets of references that are identified as the possible sets of reference equivalents.

Conveniently the generating step can include performing a sort by title, performing a sort by author and performing a sort by endpage.

According to yet another embodiment of the invention is a method for determining possible sets of reference equivalents by processing a plurality abstracts of references. The method includes the step of scanning the abstracts for words of at least a certain number of characters in length (i.e. words of sufficiently high character length) and storing at least those of the sufficiently high character length words that are not nuisance words in storage upon each occurrence. Each of the stored words is equated with the corresponding reference of the abstract from which the stored word was scanned from. The method also includes the step of establishing counts, one for each of groupings of two or more references sharing one or more of the non-nuisance stored words. For each of the groupings, the number of the non-nuisance stored words shared between the two or more references is counted. The possible sets of reference equivalents are identified by determining which of the groupings have an associated count that is above a threshold. It is these groupings that are identified as the possible sets of reference equivalents.

According to yet another embodiment of the invention is a computer program product having a computer readable medium storing code for a user interface. The user interface includes a plurality of interactive elements. A number of the interactive elements permit defining of a reviewer data report limited to response data of certain questions posed in electronic review forms of an evaluation of references undertaking. A computer terminal user selects these certain questions using the interactive elements.

Conveniently the reviewer data report can be provided in the form of a table where the selected questions are shown in either the rows or the columns of the table.

Conveniently the interactive elements can include check boxes.

Reference will now be made, by way of example, to the accompanying drawings in which:
Figure 1 shows a block diagram of an example architecture within which methods in accordance with example embodiments of the invention can be carried out;
Figure 2 is a pictorial diagram for the purpose of illustrating a method of reference categorization in accordance with an example embodiment;
Figure 3A shows data in an example table used in connection with carrying out duplicate checking in accordance with a number of examples;
Figures 3B and 3C show data in example tables used in connection with carrying out duplicate checking in accordance with at least one alternative example;
Figure 3D shows an example interactive window in which a computer terminal user can scan for possible duplicate references; and
Figure 4 shows an example web page that can be interacted to carry out reviewer data mining.

Similar reference numerals may have been used in different figures to denote similar components.

As used herein, the term "reviewer" refers to a person charged with the task of reviewing a specific article, piece of literature or other document.

A number of example embodiments disclosed herein relate to methods, systems and software for a variety of different types of undertakings involving some form of evaluation of references; however certain example embodiments disclosed herein relate specifically to systematic reviews. A systematic review is a highly structured review of existing literature on a specific subject or group of subjects with the goal of distilling a targeted subset of knowledge from the global repository of available information.

Systematic reviews are conducted by having subject matter experts review identified pieces of literature and complete a series of forms designed to first screen out irrelevant documents and later to extract core data from the forms that pass the screening process. The protocols for conducting systematic reviews need to be rigorous and well defined in order for the results of the review to be valid. A typical systematic review surveys all available existing literature on a specific topic to determine if a particular scientific question or group of questions has been answered, or to distil an aggregate of all available information to answer a particular question or group of questions. A simple example of such a question might be: does drug A significantly shorten the duration of disease B?

In the context of a systematic review, an article will vetted by reviewers against a number of forms in order to first validate its appropriateness for the review, and then to extract the required data from it. The forms provided in typical systematic review may include the following: initial screening form, strict screening form, data extraction form.

***Initial Screening Form:*** Used to quickly determine if an article may be appropriate for the systematic review. During the initial screening stage reviewers often complete the form using only article abstracts and bibliographical information. An example initial screening question might be "Is this study an RCT?"

***Strict Screening Form:*** Associated with a second stage of screening in the systematic review where, typically, reviewers are given full copies of articles when completing screening forms to determine if particular articles should remain in the study.

***Data Extraction Form:*** This form is used to extract information from articles that have made it past screening. This is the information that will be used in the final analysis for the systematic review. Typical data abstraction questions are "number of patients in the study?", "what was the outcome of the study?", "what type of allocation concealment was used?", etc.

In most systematic reviews, articles progress through the review in a linear fashion, starting with screening forms and ending with data extraction. Because of this, each form in at least some examples of systematic reviews (of the type described herein) will have an associated level. The level of a form defines its position in the overall systematic review process. One or more algorithms are associated with each level for determining how to process articles based on reviewer input. Some of these algorithms are applied to articles to either promote or exclude them based on reviewer response to a form. Possible level types in at least some examples of systematic reviews (of the type described herein) include the following: liberal screening, strict screening, data extraction.

***Liberal Screening:*** Liberal screening is typically the first level of screening in the systematic review. It is used to quickly exclude articles that are obviously not applicable to the particular review. Reviewers in liberal screening have access only to citations and abstracts, and not to full copies of articles.

In at least one example of the liberal screening level type, articles are promoted if one of two criteria are met:
o At least one reviewer responded with Inclusion or Neutral responses to every question in a single form
o The same Exclusion response was not selected by all reviewers

***Strict Screening:*** Strict screening typically follows liberal screening in the systematic review. In strict screening, reviewers typically have access to the full article being screened.

In at least one example of the strict screening level type, articles are promoted if the following criterion is met: no reviewers select exclusion or neutral responses for any of the questions in the form, and articles may only be excluded from this type of level if all reviewers select at least one matching exclusion response from the form, but if none of the above criteria are met, the article will go into a state of conflict. The article will remain at its current level in a conflict state until all reviewers either select inclusion responses for all questions or they agree on at least one exclusion response.

***Data Extraction**:* The level type where data is drawn from the vetted articles. In at least some examples of the data extraction level type, there is no inclusion/exclusion capability (as contrasted to the above described level types). Articles are promoted from a data extraction level as soon as the required number of reviewers have submitted their responses.

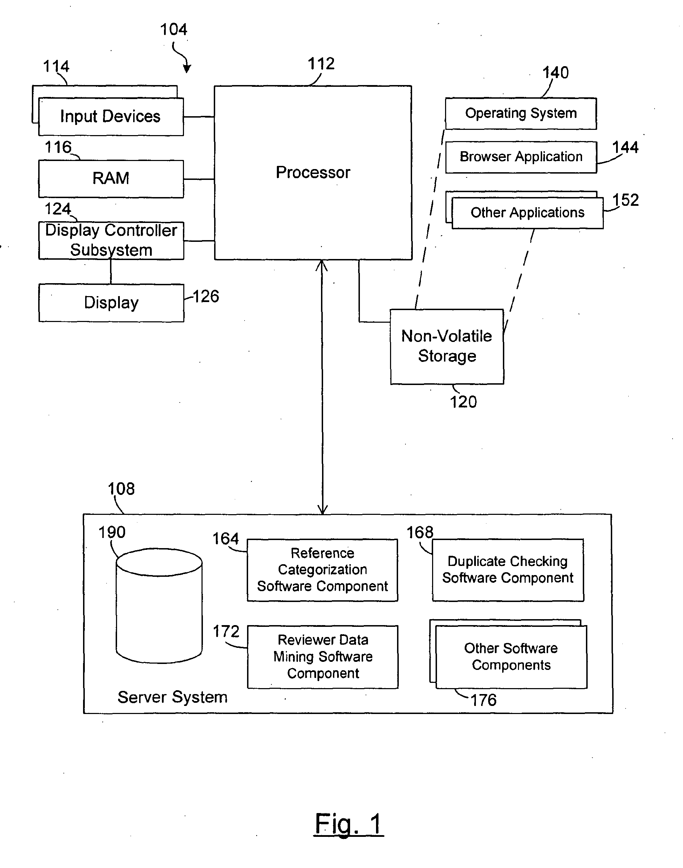

Reference is now made to Figure 1 which shows a block diagram of an example architecture within which methods in accordance with example embodiments of the invention can be carried out. Included within the illustrated architecture are one or more computer terminals 104 and a server system 108. In some example embodiments, the computer terminal 104 is a personal computer system; however in other example embodiments the computer terminal 104 is a selected one or more of the following: a handheld device, a mobile phone, a personal digital assistant (PDA), a laptop computer, an audio-visual terminal, a television, and other devices. With respect to the server system 108, this could comprise a single physical machine or multiple physical machines. It will be understood that the server system 108 need not be contained within a single chassis, nor necessarily will there be a single location for the server system 108. As will be appreciated by those skilled in the art, at least some of the functionality of the server system 108 can be implemented within the computer terminal 104 rather than within the server system 108.

The computer terminal 104 communicates with the server system 108 through one or more networks. These networks can include the Internet, or one or more other public/private networks coupled together by network switches or other communication elements. The network(s) could be of the form of, for example, client-server networks, peer-to-peer networks, etc. Data connections between the computer terminal 104 and the computer system 108 can be any number of known arrangements for accessing a data communications network, such as, for example, dial-up Serial Line Interface Protocol/Point-to-Point Protocol (SLIP/PPP), Integrated Services Digital Network (ISDN), dedicated lease line service, broadband (e.g. cable) access, Digital Subscriber Line (DSL), Asynchronous Transfer Mode (ATM), Frame Relay, or other known access techniques (for example, radio frequency (RF) links). In at least one example embodiment, the computer terminal 104 and the computer system 108 are within the same Local Area Network (LAN).

The computer terminal 104 includes at least one processor 112 that controls the overall operation of the computer terminal. The processor 112 interacts with various subsystems such as, for example, input devices 114 (such as a selected one or more of a keyboard, mouse, touch pad, roller ball and voice control means, for example), random access memory (RAM) 116, non-volatile storage 120, display controller subsystem 124 and other subsystems [not shown]. The display controller subsystem 124 interacts with display 126 and it renders graphics and/or text upon the display 126.

In the illustrated example architecture, operating system 140 and various software applications used by the processor 112 are stored in the non-volatile storage 120. The non-volatile storage 120 is, for example, one or more hard disks or some other suitable form of computer readable medium that retains recorded information after the computer terminal 104 is turned off. Those skilled in the art will appreciate that the operating system 140, browser application 144, and other applications 152, or parts thereof, may be temporarily loaded into a volatile store such as the RAM 116. The processor 112, in addition to its operating system functions, can enable execution of the various software applications on the computer terminal 104.

The browser application 144 is a program used to view, download, upload, surf, and/or otherwise access documents (for example, web pages). In some example embodiments, the browser application 144 is the well known Microsoft® Internet Explorer™. The browser application 144 reads pages that are marked up (for example, in HTML). Also, the browser application 144 interprets the marked up pages into what the user sees rendered as a web page. The browser application 144 can be run on the computer terminal 104 to cooperate with software components on the server system 108 in order to enable a computer terminal user to carry out actions related to the review of documents. In such circumstances, the user of the computer terminal 104 is provided with a user interface generated on the display 126 through which the user inputs and receives information in relation to the review of documents.

The server system 108 includes several software components for handling requests originating from applications (such as the browser application 144, for example). In particular, the server system 108 includes a selected one or more of the following: a reference categorization software component 164, a duplicate checking software component 168 and a reviewer data mining software component 172. In at least one example, certain systematic review methods such as liberal screening and strict screening are at least in part implemented by the reference categorization software component 164.

The server system 108 also includes a number of other software components 176. In some example embodiments, the other software components 176 include at least some of the server-side software of the systematic review system disclosed in United States Patent Application No. 10/910,111 filed on July 30, 2004 now published under publication No. US 2005/0120294 A1, the entire contents of which are hereby incorporated by reference. The server system 108 also includes one or more data stores 190. In some examples, the data store 190 comprises one or more databases within which can be found collected data of an evaluation of references undertaking. In at least one alternative example, these one or more databases are located at the computer terminal 104 rather than within the server system 108. Also, in some examples at least part of the functionality of a selected one or more of the reference categorization software component 164, the duplicate checking software component 168 and the reviewer data mining software component 172 are implemented within one or more applications running on the processor 112 rather than within the server system 108.

### Sub-screening of References After Screening of References

Sometimes an evaluation of references undertaking is designed to answer a plurality of questions, rather than a single question. For convenience, this type of evaluation of references will be referred to as a plurality of questions evaluation. Such an undertaking will often involve publications searches that return references that share the common theme of the evaluation but also contain a subset of data that may not be common across all references. As in single question evaluations, evaluations designed to answer a plurality of questions will, in some examples, use a common set of screening questions to qualify references for inclusion in the study. In some examples, evaluations designed to answer a plurality of questions will also include questions in screening forms that are designed to determine which (if any) of the general level(s) or general and conditional-levels of the evaluation a particular reference should fall into.

In some examples, reviewers can bring out data from successfully screened references in a plurality of questions evaluation by completing one or more data extraction forms. In some of these examples, the reviewers will be presented with one or more data extraction forms to record data that Is common to all screened references, and also one or more data extraction forms that only apply to references in certain conditional levels.

In at least one example embodiment, the reference categorization component 164 on the server system 108 cooperates with a query building application [not shown] on a network-connected computer terminal to automate the sub-screening of references into their applicable extraction forms. In at least one example, the query building application can be used to define queries that return references that meet specific criteria, and the criteria used in the query will be based on reviewer data submitted for references in earlier forms. In at least one example, each data extraction form is assigned a query that will determine which references will get reviewed using that form.

A method of reference categorization in accordance with an example embodiment includes the step of a plurality of references being first placed into a general screening level. In association with this level there could be, for example, a particular interactive window in a region of the display 126 which would contain one or more questions and associated prompts (such as a number of radio buttons or a text input field, for example) for the reviewer to respond to the one or more questions through operation of one or more of the input devices 114. In some examples, the one or more questions presented to the reviewer will be displayed in a single interactive window. In other examples, the one or more questions presented to the reviewer will be displayed in a plurality of interactive windows.

At least one of the questions displayed on the display 126 may serve to screen out references that are not relevant to a primary topic or question of the evaluation. Also, one or more of the other questions displayed on the device 126 may serve to sub-screen certain references into conditional levels as explained below.

In a number of examples of the reference categorization method, the next step after the entering of sufficient and determinative reviewer responses is the screening out of the references that are not relevant to the review by reference to the reviewer responses to one or more screening questions. Next, the remaining references (not screened out) enter a sub-screening level. In this level, the references are separated out or allocated to general and conditional levels. All of the references that reach the sub-screening level will be allocated to general levels. A subset (i.e. one or more) of the references that reach the sub-screening level may also be allocated to conditional levels based on one or more of the response sets to other questions displayed in the above-described interactive window.

When the removal and/or sub-screening of references occurs will vary. For example, the removal and/or sub-screening of references may be performed once all of the questions have been responded to. Alternatively, the removal and/or sub-screening of references may be performed once a particular number (or all) of the reviewers have agreed on the responses to the questions.

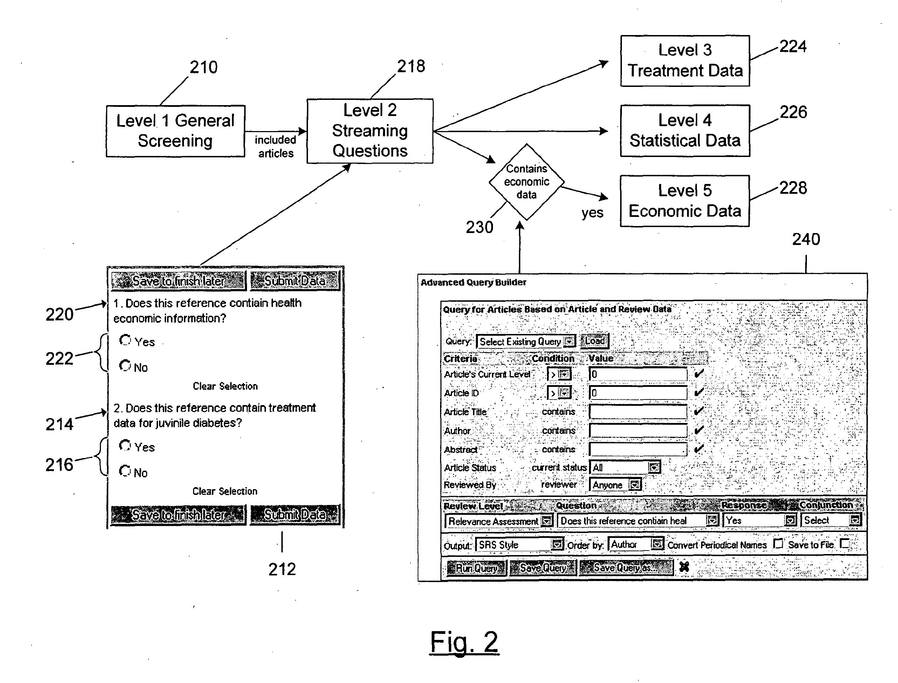

Figure 2 is a pictorial diagram for the purpose of illustrating a method of reference categorization in accordance with an example embodiment. In the illustrated example, the evaluation of references undertaking is a systematic review being conducted on juvenile diabetes, specifically the treatment of juvenile diabetes, in order to determine the most effective treatment regime and to determine the cost of such treatments. First, a plurality of references are placed into a general screening level 210. Whether the references are screened out will depend upon a set of reviewer responses to a certain posed question. In particular, illustrated interactive window 212 presents screening question 214: "Does this reference contain treatment data for juvenile diabetes?". Also, the reviewer is provided with accompanying radio buttons 216 for entering a Yes or No response through operation of one or more of the input devices 114. If the reviewer enters a "No" response for a particular reference; that reference is not passed on to streaming (sub-screening) level 218. Thus, references that are not relevant to the treatment of juvenile diabetes are screened out. Also, it will be understood that although only one general screening level is depicted in Figure 2, there can be any suitable number of general screening levels.

The references for which the reviewer enters a "Yes" response (i.e. included references as opposed to screened out references) pass into the sub-screening level 218. The question within the interactive window 212 that is applied at the sub-screening level 218 is question 220: "Does this reference contain health economic data?". The reviewer is again provided radio buttons 222 for entering a Yes or No response through operation of one or more of the input devices 114. In the illustrated example, all of the questions are presented in a single interactive window 212 but the skilled person would understand that the questions need not be presented in a single interactive window 212 but rather a plurality of interactive windows or any other suitable means for interaction between the reviewer and the data collecting application (such as the browser application 144, for example) may be implemented.

All of the references that reach the sub-screening level 218 are allocated to the general levels, which in the illustrated example are "Level 3 Treatment Data" 224 and "Level 4 Statistical Data" 226. All of the references that reach the sub-screening level 218 might also be allocated to "Level 5 Economic Data" 228, but only those references for which the reviewer entered "Yes" to the question "Does this reference contain health economic data?". Such references pass through filter 230 and reach the "Level 5 Economic Data" 228.

In at least one example embodiment, each of the general and conditional levels (following one or more lower sub-screening levels) is associated with a particular data extraction form. Also, each of the extraction associated with a particular data extraction form. Also, each of the extraction forms associated with the general levels will serve to record data that-is common to all screened references, and each of the forms associated with the conditional levels will serve to record data that only applies to the references which reach that particular conditional level. It should be understood that a plurality of data extraction forms (rather than just a single data extraction form) may alternatively be associated with a particular level.

In at least one example, queries are constructed by a manager of the references evaluation undertaking (e.g. the study administrator when the references evaluation undertaking is a systematic review) in illustrated interactive query-building window 240 of the query-building application mentioned previously. Also, it will be understood that, in the illustrated example, defining of the filter 230 is carried out by completion of the query-building window 240. The query-building window 240 includes a number of input fields, drop down lists and check boxes. The undertaking manager (e.g. study administrator) may select queries and conditions associated with particular queries (e.g. filter criteria) by selecting various options. For example, the study administrator may select a level (e.g. a general screening level), a query and a particular response (e.g. if the response to the question is no, the reference could be screened out).

### Duplicate Checking

At the initial stage of an evaluation of references undertaking, there is a gathering (e.g. search) for references placed into the first general screening level. In accordance with at least one example embodiment, a check is performed to verify that there are no duplicate references in the references pool at some point soon after the gathering of the references. An impact of allowing duplicate references to make it into an evaluation of references undertaking is increased inefficiency by creating duplicate work in screening and data extraction. An impact of undetected duplicates is the skewing of results by adding more weight to the same information that is found in duplicate references.

In at least one example embodiment, the duplicate checking software component 168 employs a number of different algorithms for detecting duplicate references. (These algorithms are described in more detail in a subsequent portion of this patent document.) While each algorithm can be applied independently, in some examples the algorithms are applied consecutively in order to minimize the number of false positive matches. Also, a user interface is provided to the user of the computer terminal 104 to select which algorithms to apply and when they should be applied. It will be understood that at least some of the algorithms that are possible may be applied in any order.

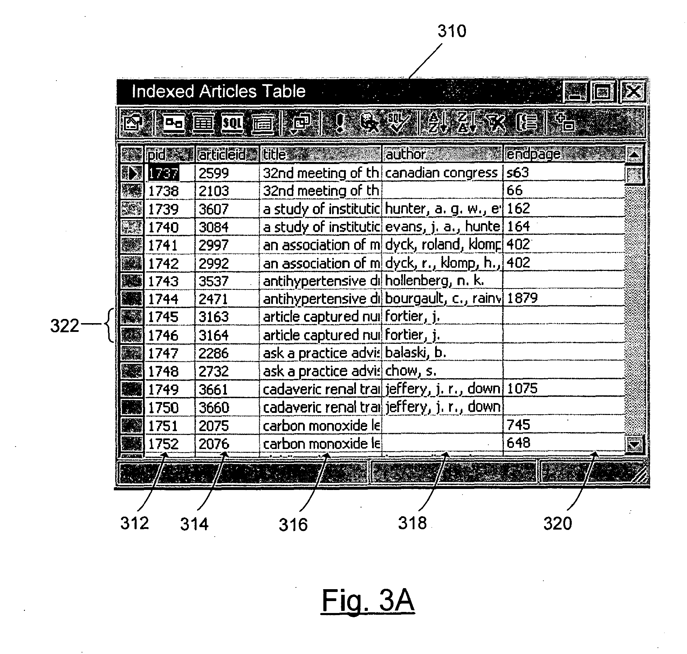

Before applying any of the duplicate checking algorithms, in at least one example, the title, author and "endpage" fields of each reference are copied into a table. Data from an example table is shown in window 310 of Figure 3A. The illustrated table contains data which is organized into a plurality of columns 312, 314, 316, 318 and 320 corresponding to the following fields: "pid", "articleid", "title", "author" and "endpage", respectively. The "pid" field identifies the row in which the data associated with a particular reference lies in the table. The "articleid" field contains a number that uniquely identifies a particular reference amongst the pool of references. The "title", "author" and "endpage" fields contain title, author and endpage data respectively.

Prior to being stored in a column of the table, in at least one example, punctuation is removed from the reference fields, the title and author fields are converted to lower case, and the first and last two characters from each of the title and author fields are removed.

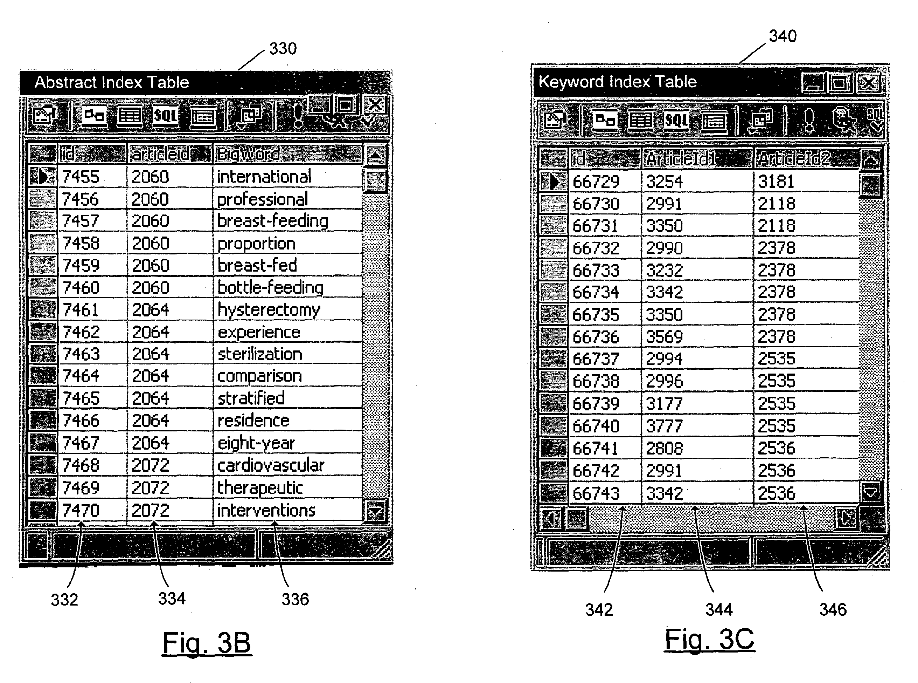

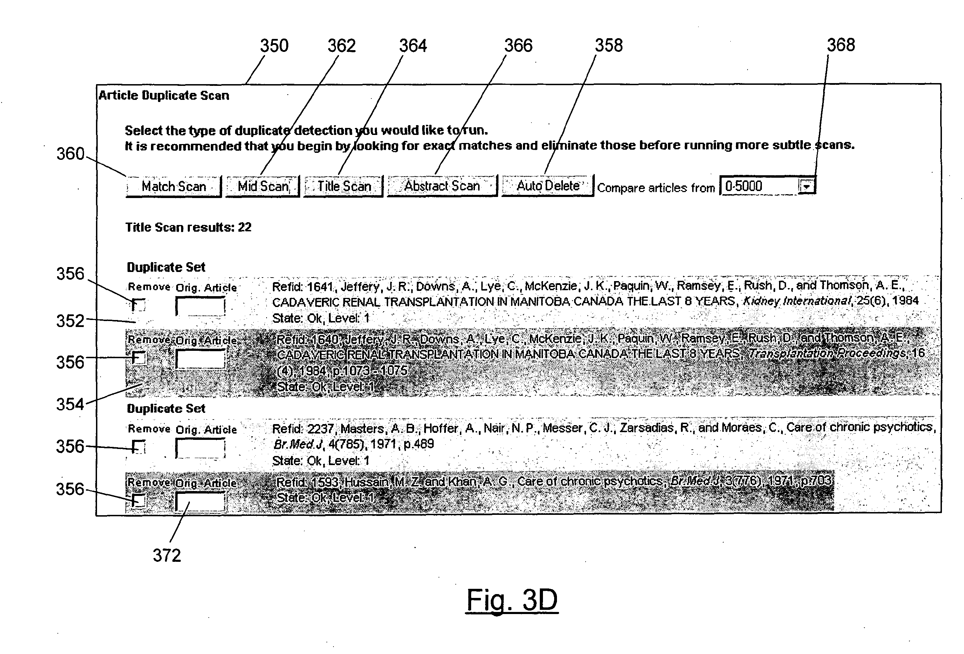

In some examples, abstract keyword indexing is carried out before any of the duplicate checking algorithms are applied. This is done by first scanning each abstract for words that are of a predetermined size or larger. These words are referred to as "big words" and preferably have a size of at least 10 characters. The punctuation is removed from these "big words" and they are converted to lower case. Each "big word" is then compared against a list of "nuisance words", i.e. fragments of large words that are generic and unlikely to be a good basis for comparison such as "background", "strategies" and "objective", for example. A predetermined number of the "big words" found in the abstract of each reference that do not match "nuisance words" are stored (in association with that reference). (One way of changing the accuracy of the duplicate scan is by way of changing the predetermined number of "big words" stored.) Those "big words" that are found in the abstract of each reference and that do not match "nuisance words" are copied into a table. Data from an example table is shown in window 330 of Figure 3B. The illustrated table contains data which is organized into a plurality of columns 332, 334 and 336 corresponding to the following fields: "id", "articleid" and "BigWord". The "id" field identifies the row in which the data associated with a particular reference lies in the table. The "articleid" field contains a number that uniquely identifies a particular reference amongst the pool of references. The "BigWord" field contains a "big word" that is not a "nuisance word".

In carrying out a duplicate checking method consistent with the illustrated example, the table can be sorted by "big word" so the rows of the table that contain the same "big word" will be adjacent to one another. Following this step, certain rows are removed. In particular, those rows with "big word" that do not appear in any other rows are removed. Next, article identification numbers of pairs of references that share the same "big word" are written out to another table. A portion of an example of such a table is shown in window 340 of Figure 3C.

The data stored in the illustrated table is organized into a plurality of columns 342, 344 and 346 corresponding to the following fields: "id", "ArticleId1" and "ArticleId2", respectively. The "id" field identifies a particular row in the illustrated table. The "ArticleId1" field contains the article identification number of the first reference of a particular pair of references that share the same "big word". The "ArticleId2" field contains the article identification number of the second reference of a particular pair of references that share the same "big word". For each pair in the illustrated example, the higher of the two article identifications numbers is written to the ArticleId1 field and the lower article identification number is written to the ArticleId2 field.

A duplicate checking algorithm in accordance with at least one example is as follows. In summary, the author, title and end page fields of each reference are compared to see if there is an exact match of all three fields. Making reference to the table described in connection with Figure 3A as an example, the comparison can be performed by first sorting the data in the table by title, author and endpage fields, and then looking for incidents of matching rows. Any two rows containing the same data in the author, title and endpage fields are considered to be duplicates. For example, a pair of rows 322 in the table illustrated in Figure 3A reveal that two references associated with the rows have the same author, title and endpage fields. Thus, the two references would be identified as being duplicates and would be presented to a computer terminal user who requested the scan for final determination as to whether or not these matches represent true duplicates.

A duplicate checking algorithm in accordance with at least one alternative example is as follows. Here the comparison is performed by first sorting the data in the table by the title and author fields and then looking for incidents of matching rows. Any two rows containing the same data in the author and title fields are considered to be duplicates. Thus, there is duplicate reference identification in the case of two exact matching fields (author and title fields) as contrasted to duplicate identification in the case of three exact matching fields (author, title and endpage fields).

A duplicate checking algorithm in accordance with one or more additional alternative examples is as follows. Here the comparison is performed by first sorting the data in the indexed articles table by the title field and then looking for incidents of matching rows. Any two rows containing the same data in the title field are considered to be duplicates. Thus, there is duplicate reference identification in the case of one exact matching field (title field).

While the above described examples relate to checking one or more of the following fields: author field, title field and endpage field, any suitable field may be checked. For example, the date of publication of the reference may be checked. In some examples an "exact" match is not required.

Other duplicate checking algorithms are contemplated. Making reference to the table described in connection with Figure 3C as a further example, sorting can be carried out first by the "ArticleIdi"fields, and then by the "Article Id2" fields. The number of matching "ArticleId1" and "ArticleId2" fields for pairs of identification numbers are counted and compared to a threshold value. If the count exceeds the threshold, then the article identification numbers of the pair of references and the count is recorded in an array. The contents of the array might be displayed in an interactive window [not shown]. Specifically, the references that had matching "big words" and the count would be displayed. A percentage likelihood of each pair being duplicates could also be calculated by dividing the count by the maximum number of "big words" retrieved per reference and displayed to the user in the same interactive window. Through the interactive window the user who requested the scan could make the final determination as to whether or not the possible matches represent true duplicates.

Figure 3D illustrates an example results interactive window 350 of a user interface of an application (the browser application 144, for example) of the computer terminal 104. Under the heading ''Duplicate Set", citations 352 and 354 of possible duplicate references are listed (e.g. the authors, title, bibliographic information and/or any other suitable information about the references is listed). The reviewer (or other computer terminal user) reviews the information that is presented and, if the references appear to be the same, may remove one of the duplicates by selecting the corresponding one of check boxes 356. Alternatively, the reviewer may select the "Auto Delete" icon 358, which would automatically delete all but one of the possible duplicate references in at least a number of sets (but a strict scan such as the scan carried out in accordance with the three field match algorithm might be automatically run before automatic deletion so that selecting the "Auto Delete" icon 358 might still preserve certain possible duplicates from being deleted in case of possible false positives).

In the illustrated example, the reviewer may select a particular algorithm by selecting a corresponding one of icons 360, 362, 364 and 366. The icon 360 will initiate the previously described three field match algorithm, the icon 362 will initiate the previously described two field match algorithm, the icon 364 will initiate the previously described one field match algorithm and the icon 366 will initiate the "big words" duplicate checking algorithm. The reviewer may select a particular range of references to be checked for duplicates. By selecting '0-5000' using drop-down selector 368, any scan run by the reviewer (or computer terminal user) will check references 0-5000 for duplicates. Selecting a particular range of reference to be checked rather than all references can reduce the number of results and/or computation time. In the illustrated example, when a particular reference in a duplicate set is to be deleted, the "Orig article" field 372 may be used to record the article identification number of reference(s) of the duplicate set that is deleted. This number would be stored in association with the deleted article.

With reference again to Figure 1, it will be understood that in some examples, the previously described tables (or similar tables) will be stored on the data store 190. Alternatively, in those examples where a duplicate checking module is implemented entirely within the computer terminal 104, the table could be stored on the non-volatile storage 120. Duplicate checking in accordance with at least some example embodiments involves not only dealing with identifying a pair of references (i.e. two references) that appear to provide the same information, but also addresses checking for three, four, five (and so on) references which appear to provide the same information.

### Reviewer Data Mining

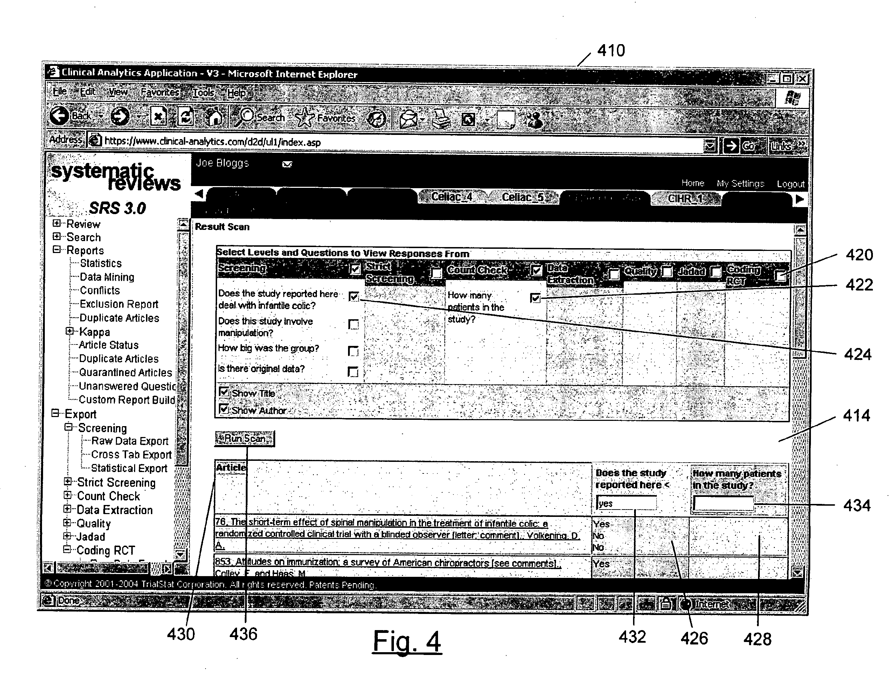

Figure 4 is a screen shot of a web page that can be interacted with to carry out reviewer data mining. In at least one example, the browser application 144 (Figure 1) generates user interface window 410 on the display 126 through which requests will be inputted for processing by the reviewer data mining software component 172 on the server system 108. Although the illustrated user interface window 410 is generated by a browser application, those skilled in the art will appreciate that user interface windows of other types of applications can be used to achieve similar functionality. Also, it will again be understood that in some examples, at least part of the functionality of the reviewer data mining software component 172 and/or the data store 190 will be provided instead by components/subsystems within the computer terminal 104.

Frame 414 is within the user interface window 410. The information displayed within the frame 414 may be controlled at least in part by selections made within the frame 414.

Within the illustrated frame 414, a plurality of check boxes 420 for each of the forms that exist in the systematic review of the illustrated example are made available for selection by the computer terminal user. In at least one example, these check boxes are generated dynamically by querying a database on the data store 190 for all forms that were completed by at least one reviewer. Any of the check boxes 420 can be selected by a computer terminal user using one or more of the input devices 114 (such as a mouse, for example). Once a particular number of forms are selected using the associated check boxes 420. ("Screening" and "Count Check" were the forms that were selected in the illustrated example) all of the questions provided in that those forms are shown within the frame 414.

In the illustrated example, the user then selects which of the questions displayed in the frame 414 they wish to view responses from by checking off the appropriate check boxes. Check boxes may be provided for each question (e.g. check box 422 for the question, "how many patients in the study?" and check box 424 for the question, "does the study reported here deal with infantile colic?"). It will be noted that in the illustrated example questions are not displayed for those forms for which a check has not been entered into the corresponding check box.

In the illustrated example, when the computer terminal user selects a particular check box associated with one of the displayed questions, a corresponding column is generated within table 430. For example, column 426 is associated with the question "does the study reported here deal with infantile colic?" and is generated when the check box 424 is checked off. As another example, column 428 corresponds to the question "how many patients in a study?" and is generated when the check box 422 is checked off.

In the implementation of the illustrated example, the table 430 will initially be empty; however by selecting the "Run Scan" icon 436, a query will be run and various responses submitted by reviewers will be returned, and which responses are returned depends upon the query that was defined. In the illustrated example, each row in the table 430 relates to one article. For example, in the first row of the table 430, the article is, "The short-term effect of spinal manipulation in the treatment of infantile colic: a randomized control clinical trial with a blinded observer". As shown, the author of this article is "Volkening", and the article identification number is "76".

In the illustrated example, there are also text boxes 432 and 434 within the table 430 (in the header of each of the columns 426 and 428, respectively). By entering filter criteria in these text boxes (e.g. the response "yes" for the question "does the study reported here deal with infantile colic?" in the text box 432), the user can reduce/refine the results shown in the table 430.

After one query has been run and the results have been displayed, a different query can be subsequently run by modifying which check boxes are checked off) etc. and reselecting the "Run Scan" icon 436.

It will be noted that in the illustrated implementation, filter criteria needs to be entered into the header text box for the column in the table 430 associated with a particular question. For example, no filter criteria was entered in the text box 434 and consequently no reviewer responses for the column 428 were returned the scan that produced the results shown in the table 430.

Thus, an example embodiment of the invention provides a user interface for visually defining queries to return data submitted by reviewers. In some example, the results generated by the queries can be saved into a file for subsequent use in the preparation of formal reports.

A number of the examples that have been described in this patent document are drawn from the context of systematic reviews; however it will be understood that some example embodiments also relate to other types of undertakings involving an evaluation of references besides systematic reviews. For example, an analysis of competing products in a marketplace for generation of feature grids is one example of an undertaking that is not a systematic review, but that might be described as being an evaluation of references undertaking. Another example of an evaluation of references undertaking would be a case analysis study where, for instance, junior associates in a law firm could review precedent cases based upon form criteria defined by one or more senior firm members, so as to generate a distilled, searchable dataset.

Certain adaptations and modifications of the described embodiments can be made. Therefore, the above discussed embodiments are considered to be illustrative and not restrictive.

## Claims

1. A method for reference categorization carried out in a computerized evaluation of references undertaking of the type in which questions including screening questions (214) and sub-screening questions (220) are posed to reviewers of the references, the method **characterized by** steps of:
accepting responses to said screening questions (214) and said sub-screening questions (220), said responses provided by said reviewers and recorded in a data store (120, 190);
excluding at least one of said references from said undertaking, said excluding of the reference a result of at least one of said screening question responses;
promoting a subset of said references from a screening level (210) to a higher level (224, 226), said promoting of the subset a result of at least another of said screening question responses; and
allocating at least one of said subset to an additional level (228), said allocating of said one of the subset a result of at least one of said sub-screening question responses.

2. The method as claimed in claim 1 **characterized in that** said computerized evaluation of references undertaking is a computerized systematic review and said references are medical research related articles.

3. The method as claimed in claim 1 or 2 **characterized in that** said one of the subset contains a first type of data common to all members of said subset, and said one of the subset also contains a second type of data exclusive to said one of the subset.

4. The method as claimed in any one of claims 1 to 3 **characterized by** a further step of generating a data extraction form for each reference of said subset for each of said reviewers, said data extraction form displayable within a user interface on a display (126).

5. The method as claimed in any one of claims 1 to 4 **characterized in that** said at least another of the screening question responses is at least two screening question responses, one of said two screening question responses being a response to a liberal screening question and the other of said two screening question responses being a response to a strict screening question.

6. An article of manufacture **characterized by** its being used in a computerized evaluation of references undertaking of the type in which questions including screening questions (214) and sub-screening questions (220) are posed to reviewers of the references, and responses to the screening questions (214) and the sub-screening questions (220) are recorded in a data store (120, 190), the article of manufacture comprising:
at least one processor readable carrier including:
(i) code for accepting said responses provided by said reviewers;
(ii) code for excluding at least one of said references from said undertaking, said reference excluded on account of at least one of said screening question responses;
(iii) code for promoting a subset of said references from a screening level (210) to a higher level (224, 226), said subset promoted on account of at least another of said screening question responses; and
(iv) code for allocating at least one of said subset to an additional level (228), said one of the subset allocated on account of at least one of said sub-screening question responses.

7. The article of manufacture as claimed in claim 6 **characterized in that** said computerized evaluation of references undertaking is a computerized systematic review and said references are medical research related articles.

8. The article of manufacture as claimed in claim 6 or 7 **characterized by** further comprising code for generating a data extraction form for each reference of said subset for each of said reviewers, said data extraction form displayable within a user interface on a display (126).

9. The article of manufacture as claimed in any one of claims 6 to 8 **characterized by** further comprising code for generating reports (430) detailing responses to said questions, and content of said reports impacted by said screening question responses and said sub-screening question responses.

10. A method for conducting an evaluation of references undertaking in which a defined references set is reviewed and evaluated, the method **characterized by** steps of:
establishing a set of levels (210, 218, 224, 226, 228), said levels (210, 218, 224, 226, 228) including at least one general level (224, 226) and at least one conditional level (228);
assigning reviewers to said levels (210, 218, 224, 226, 228);
defining a review schema, said review schema including algorithms for promoting a subset of said references set to said general level (224, 226) and for sub-screening at least one of said subset to said conditional level (228);
establishing a set of electronic review forms for receiving data from said reviewers;
collecting said data entered into said electronic review forms, said data enabling said algorithms to be carried out; and
carrying out said algorithms,
whereby said subset is promoted to said general level (224, 226) and said one of the subset is sub-screened to said conditional level (228).

11. The method as claimed in claim 10 **characterized in that** said evaluation of references undertaking is a systematic review and said references are medical research related articles.

12. The method as claimed in claim 10 or 11 **characterized in that** the step of carrying out said algorithms is performed within a server system (108) and said electronic review forms are stored on said server system (108).

13. The method as claimed in claim 12 **characterized in that** said electronic review forms are stored in a markup language.

14. The method as claimed in any one of claims 10 to 13 **characterized in that** said levels (210, 218, 224, 226, 228) further include at least one liberal screening level and at least one strict screening level, and each reference of said reference set falling outside of said subset are screened out at a selected one of said liberal screening level and said strict screening level.

15. The method as claimed in any one of claims 10 to 14, **characterized in that** the step of defining said review schema includes running a query building application to create queries forming a part of said review schema.
